# EUROPÄISCHE PATENTSCHRIFT

(11) **EP 2 978 991 B1**
(45) Veröffentlichungstag und Bekanntmachung des Hinweises auf die Patenterteilung: **24.04.2019**
(21) Anmeldenummer: 13796027.4
(22) Anmeldetag: 20.11.2013
(51) Int. Cl.: F16F 7/104, F02B 77/13

(54) **SCHWINGUNGSDÄMPFER FÜR ABSCHIRMBLECH**
VIBRATION DAMPER FOR SHIELDING PLATE
AMORTISSEUR DE VIBRATIONS POUR PLAQUE DE PROTECTION

(30) Priorität: 25.03.2013 DE 102013205230
(43) Veröffentlichungstag der Anmeldung: 03.02.2016
(73) Patentinhaber: Federal-Mogul Sealing Systems GmbH, 57562 Herdorf (DE)
(72) Erfinder: KRUS, Ralf, 51789 Lindlar (DE)
(74) Vertreter: Becker Kurig Straus
(86) Internationale Anmeldenummer: PCT/EP2013/074275
(87) Internationale Veröffentlichungsnummer: WO 2014/154307

(56) Entgegenhaltungen:
- DE-A1- 19 531 280
- US-A1- 2005 253 317
- US-A1- 2007 069 434
- US-A1- 2009 113 843

## Beschreibung

Die Erfindung betrifft Schwingungsdämpfer, insbesondere Schwingungsdämpfer für Abschirmbleche an Motorkomponenten.

### Stand der Technik

Fahrzeugbauteile wie Hitzeabschirmbleche werden durch Motorschwingung und von Motorkomponenten erzeugtem Luftschall zu Eigenschwingungen angeregt. Diese Schwingungen können zu unerwünschten akustischen und festigkeitsrelevanten Beeinträchtigungen am Abschirmblech führen.

Bisher werden die Bauteilschwingungen beispielsweise dadurch berücksichtigt, dass Abschirmbleche und ähnliche Bauteile mit verstärkenden Maßnahmen versehen werden, beispielsweise mit Versteifungen durch das Einbringen von Rippen oder Sicken in die Blechgeometrie. Allerdings ist es oft aus fertigungstechnischen Gründen oder an Stellen mit beengtem Bauraum schwierig, eine optimale Sickenverteilung über das Blech hinweg zur Versteifung zu bilden.

Eine weitere Maßnahme zur Reduzierung der Bauteilschwingungen ist der Einsatz von Schwingungsentkopplungselementen, die im Bereich der Befestigungselemente zwischen den Bauteilen angebracht werden. Solche Elemente können beispielsweise im Schraubenbereich eingesetzte Elastomerelemente sein. Auf diese Weise werden zwei Bauteile voneinander so weit wie möglich entkoppelt, um so die Schwingungen etwa eines Abschirmblechs zu verringern. Allerdings sind dabei je nach Bauteil sehr viele einzelne Entkopplungselemente notwendig, und zur verliersicheren Anbringung sollten die Entkopplungselemente am Abschirmblech vormontiert werden, was den Aufwand beim Einbau wesentlich erhöht. Außerdem kann der Luftschall im Motorbereich auch weiterhin auf das Blech übertragen werden, dort zu Schwingungen führen und so erneut ein schwingungsfähiges Gesamtsystem erzeugen.

DE 195 31 280 A1 zeigt ein Schwingungstilgungssystem mit den Merkmalen des Oberbegriffs des Anspruchs 1.

### Zusammenfassung der Erfindung

Erfindungsgemäß wird also gemäß einer Ausführungsform ein Schwingungstilgungssystem bereitgestellt, das ein Abschirmblech für ein Motorbauteil und mindestens ein Schwingungstilgungselement umfasst, das auf dem Abschirmblech befestigt ist. Das Schwingungstilgungselement umfasst ein schwingfähiges Feder-Masse-System, dessen Federkraft und Masse so bemessen ist, dass es auf eine vorgegebene Schwingungsfrequenz des Abschirmblechs abgestimmt ist.

Ein Schwingungstilgungselement kann beispielsweise in einem Bereich maximaler Schwingungsauslenkung des Abschirmblechs befestigt sein, und/oder mehrere Schwingungstilgungselemente können in einem vorgegebenen Abstand rund um einen Bereich maximaler Schwingungsauslenkung des Abschirmblechs befestigt sein. Ebenso ist möglich, dass mindestens zwei Schwingungstilgungselemente auf dem Abschirmblech angebracht sind, die auf unterschiedliche Schwingungsfrequenzen abgestimmt sind.

In einer beispielhaften Ausführungsform ist ein Schwingungstilgungselement so abgestimmt, dass es eine anfängliche Schwingungsfrequenz des Abschirmblechs in einen vorgegebenen Frequenzbereich verschiebt. Alternativ kann das Schwingungstilgungselement so abgestimmt sein, dass es eine vorgegebene Schwingungsfrequenz des Abschirmblechs dämpft bzw. eine Schwingung mit dieser Frequenz reduziert oder eliminiert.

Gemäß einer Ausführungsform umfasst das Schwingungstilgungselement eine elastische Hülle, welche die Federkraft des Feder-Masse-Systems bereitstellt, und eine metallische Schwingmasse, die in der elastischen Hülle schwingfähig gelagert ist. In einer weiteren Ausführungsform umfasst das Schwingungstilgungselement eine metallische Schwingmasse, die zwischen zwei elastischen Elementen, welche die Federkraft des Feder-Masse-Systems bereitstellen, schwingfähig gelagert ist. Bei solchen Schwingungstilgungselementen kann das Feder-Masse-System zumindest teilweise mit einer festen Hülle umgeben sein.

Die Schwingmasse soll im Betrieb (also bei Erregung einer Schwingung des Schwingungstilgers) im wesentlichen parallel zur Auslenkungsrichtung des Bereichs des Abschirmblechs schwingfähig sein, in dem das Schwingungstilgungselement angebracht ist.

### Zeichnungen

Die Erfindung wird im folgenden mit Bezug auf die Figuren näher beschrieben, wobei
Figur 1 ein beispielhaftes Abschirmblech mit angebrachtem Schwingungstilgungselement zeigt;
Figuren 2a und 2b Schwingungstilgungselemente im Querschnitt zeigen; und
Figur 3 ein beispielhaftes Abschirmblech mit mehreren Schwingungstilgungselementen zeigt.

### Ausführliche Beschreibung beispielhafter Ausführungsformen

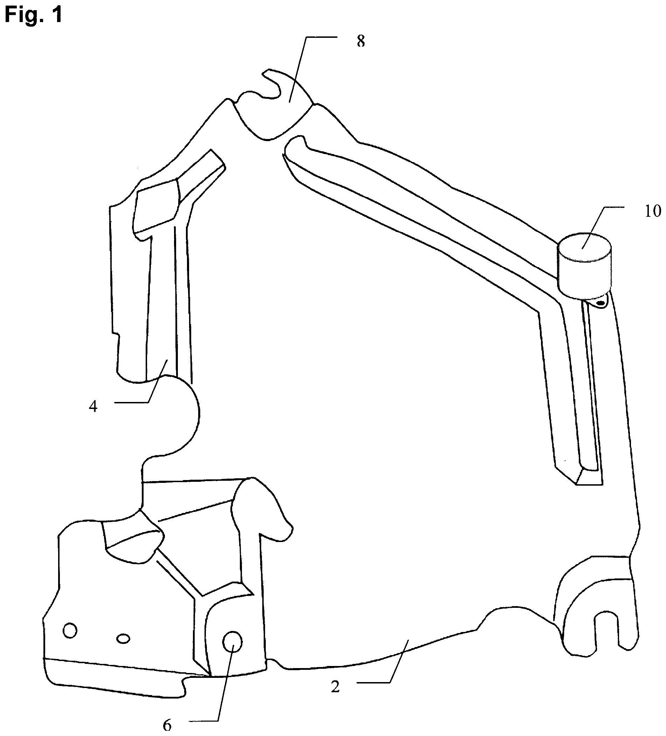

Eine beispielhafte Ausführungsform umfasst ein Abschirmblech 2 im Motorbereich eines Fahrzeugs wie in Figur 1. Mit Strich-Punkt-Linien sind Sicken, Einprägungen und Erhebungen 4 im Abschirmblech beispielhaft skizziert; je nach Bauteil können solche Einprägungen 4 auch vollständig fehlen oder anders ausgestaltet sein. Am Rand der Abschirmblechs sind, ebenfalls als Beispiel, Durchgangslöcher 6 und Befestigungsbereiche 8 gezeigt, mittels derer das Abschirmblech 2 z.B. an einem Bauteil festgeschraubt oder angenietet werden kann.

Die im Betrieb zu erwartenden Schwingungen des Abschirmblechs 2 können nun entweder aus Messungen am eingebauten Bauteil erfasst werden oder aufgrund von Berechnungen und/oder Simulationen vorhergesagt werden. So können beispielsweise die Eigenresonanzfrequenz des Abschirmblechs und die höheren Schwingungsmodi bestimmt werden. Auf diese Weise lässt sich feststellen, welche Frequenzen auftreten werden und welche Bereiche des Abschirmblechs besonders stark von Schwingungen und Resonanzen betroffen sein werden. Möglicherweise treten auch verschiedene, ähnlich starke Schwingungen auf.

Auf dem Abschirmblech 2 wird nun, wie in Figur 1 gezeigt ist, erfindungsgemäß mindestens ein Schwingungstilgungselement 10 angebracht. Das Schwingungstilgungselement umfasst ein schwingfähiges Feder-Masse-System, das in seinen Dimensionen auf die Resonanz(en) des Abschirmblechs abgestimmt ist. Durch die Bauteilanregung gerät auch das angebrachte Schwingungstilgungselement 10 so stark in Schwingung, dass es die Bewegungsenergie des Abschirmblechs 2 aufnimmt und durch Gegenschwingungen so weit abschwächt oder neutralisiert, dass die kritischen Schwingungen vermindert oder vollständig neutralisiert werden. Auf diese Weise werden, je nach Aufbau, sowohl Geräusche als auch Belastungen auf das Abschirmblech 2 wesentlich reduziert und die Haltbarkeit verbessert.

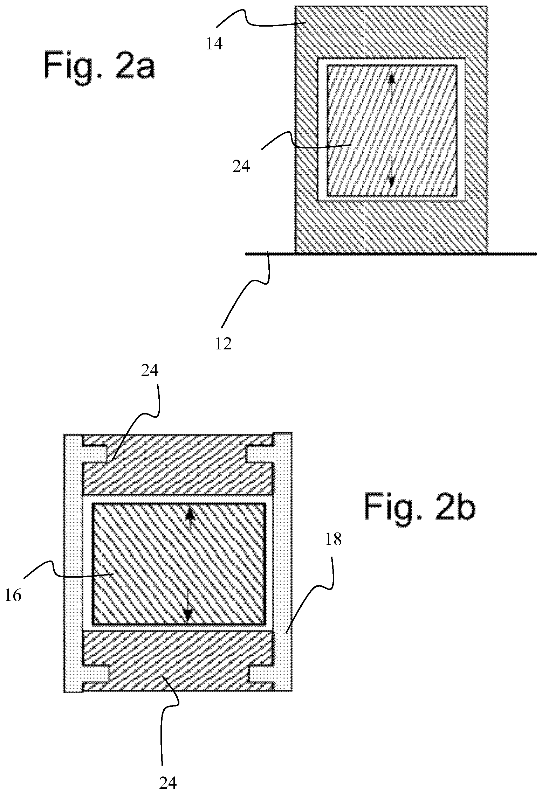

Figur 2a zeigt ein erstes Schwingungstilgungselement 10 im Querschnitt. Das Feder-Masse-System des Schwingungstilgungselements umfasst eine Schwingmasse 16, die in einer geeigneten Hülle 14 gelagert ist. Die Hülle 14 kann wie in Figur 2a aus einem elastischen Material gefertigt werden, beispielsweise einem Elastomer, und so als Federelement wirken. Durch die Elastizität wird die Schwingung der Schwingmasse 16 geregelt, die in der Hülle 14 schwingen kann. Eine mögliche Alternative ist in Figur 2 gezeigt, wo in eine feste Hülle 18, z.B. in Zylinderform, nur an den beiden Enden ein teilweise elastisches Material 24 eingesetzt wird, so dass die Masse 16 zwischen diesen beiden federnden elastischen Einsatzelementen 24 schwingt.

Bei einer Erregung von Schwingungen im Abschirmblech 2 werden diese auch in dem Tilgungselement 10 erregt und bewirken die Bewegung der Schwingmasse 16 im wesentlichen parallel zur Auslenkungsrichtung der Blechschwingungen, wie durch die Pfeile in Figur 2 angedeutet ist. Die Auslenkung der Schwingmasse 16 wird wesentlich durch die Elastizität des elastischen Materials 14, 24 oberhalb und unterhalb der Schwingmasse bestimmt. Gleichzeitig werden die Schwingungen des Schwingungstilgungselements 10 durch die innere Reibung wiederum gedämpft, so dass die übernommene Bewegungsenergie teilweise in Reibungswärme abgeführt wird. Die Schwingmasse 16 kann beispielsweise durch einen metallischen Innenkörper gegeben sein. Durch Auswahl von Größe, Härte der elastischen Außenhülle, Gewicht der Masse und Reibung kann das Schwingungstilgungselement 10 optimal auf die zu reduzierenden oder zu neutralisierenden Schwingungen am Abschirmblech 2 eingestellt werden. Je nach Ausführungsform kann ein Tilgungselement 10 auch so abgestimmt werden, dass es die unerwünschte Schwingungsfrequenz des Systems zu einer anderen, weniger kritischen Frequenz verschiebt.

Das mindestens eine Schwingungstilgungselement 10 kann beliebig am Abschirmblech 2 angebracht werden. Vorzugsweise wird es auf der Außenseite, also auf der von der Wärmequelle abgewandten Seite, angebracht, um die thermischen Belastungen auf das Schwingungstilgungselement niedrig zu halten. Die Anbringung kann beispielsweise über Nieten erfolgen. Je nach Design können die Schwingungstilgungselemente bereits einen umlaufenden oder nur teilweise umlaufenden Befestigungsrand aufweisen, in dem Befestigungslöcher für z.B. Nieten oder Schrauben eingebracht sind. In den Figuren sind Tilgungselemente 10 gezeigt, die mit seitlichen flachen Laschen 12 als Befestigungsbereich versehen sind. In einer weiteren Ausführungsform könnte das Abschirmblech 2 an geeigneten Stellen beispielsweise Vertiefungen oder Vorsprünge aufweisen, die eine Anbringung der Schwingungstilgungselemente erleichtern. Die Art und Weise der Anbringung kann optimal an den jeweiligen Ort des Schwingungstilgungselement 10 angepasst werden, so dass das Abschirmblech 2 zusammen mit den Tilgungselementen z.B. durch Vertiefungen möglichst kompakt und flach bleibt, sofern in diesem Bereich in einem Fahrzeug räumliche Begrenzungen vorliegen.

Je nach Ausführungsform können ein oder mehrere Tilgungselemente 10 auf dem Abschirmblech 2 angeordnet sein. Beispielsweise könnte ein einzelnes Element in dem Bereich angebracht werden, in dem die größten Schwingwege durch die Bauteilanregung erwartet werden, wie in Figur 1 als Beispiel gezeigt. Dieser Bereich kann durch praktische Messungen oder durch Bauteilsimulationen bestimmt werden. Es ist auch möglich, dass ein Bauteil mehrere Bereiche mit zumindest lokal maximaler Anregung/Auslenkung aufweist.

Ebenso ist es aber auch möglich, diesen einen Bereich durch mehrere Schwingungstilgungselemente abzudecken, die passend aufeinander und auf die Schwingungen abgestimmt sind. Die Schwingungstilgungselemente könnten dann beispielsweise symmetrisch um ein Schwingungszentrum herum, also etwa mit einem gewissen Abstand um die Stelle der maximalen Auslenkung des Blechs, angeordnet werden. Dazu könnten zwei oder mehr Elemente verwendet werden.

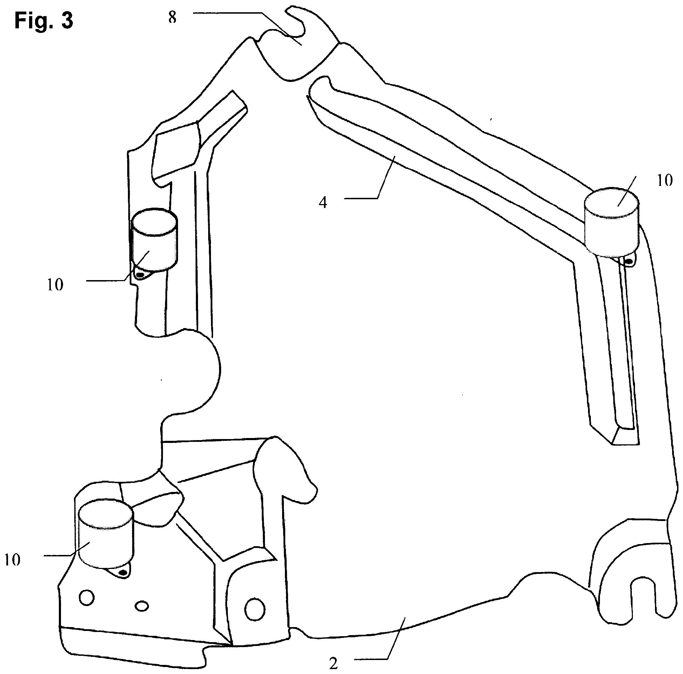

Weiter ist es denkbar, in unterschiedlich schwingenden Bereichen eines Abschirmblechs mehrere gleich oder verschieden ausgestaltete Schwingungstilgungselemente zu verbauen. Ein Beispiel dafür ist in Figur 3 gezeigt, wo drei einzelne Schwingungstilgungselemente 10 an unterschiedlichen Stellen eines Abschirmblechs angebracht sind. Das Blech 2 ist in diesem Beispiel wie in Figur 1 mit Erhebungen/Vertiefungen 4, Befestigungslöchern 6 und Befestigungsbereichen 8 ausgeformt, jedoch könnte wiederum die Form und Ausführung des Abschirmblechs 2 auch anders sein. Die verschiedenen angebrachten Tilgungselemente 10 können auf eine gemeinsame oder auf unterschiedliche Resonanzfrequenzen abgestimmt sein. So könnten beispielsweise unterschiedliche Tilgungselemente angebracht werden, um zum einen mechanische Schwingungen abzumildern, die das Abschirmblech stark belasten, während andere Elemente rein zur akustischen Dämpfung eingesetzt werden und auf Resonanzen im akustischen Frequenzbereich abgestimmt sein könnten.

Die verwendeten Materialien des Schwingungstilgungselement haben Einfluss auf das Schwingungs- bzw. Dämpfungsverhalten des Tilgungselements. Die Härte und Elastizität des federnden Teils, also beispielsweise der elastischen Hülle 14 oder der elastischen Einsätze 24, bestimmt zusammen mit der Masse (und eventuell der Form) des darin gelagerten metallischen Schwingmassenelements 16 die Frequenz des Tilgungselements 10. Dabei sollte das Elastomermaterial vorzugsweise so gewählt werden, dass die bestimmenden Eigenschaften wie die Elastizität auch unter Belastung (Hitze etc.) bestehen bleiben bzw. sich nur so ändern, dass die Veränderung bereits mit in der Abstimmung der Tilgungselemente berücksichtigt werden kann. Je nach Einsatzort soll das Material auch gegen chemische Einflüsse wie Abgase oder Öl beständig sein. Wahlweise ist auch denkbar, z.B. eine Elastomerhülle mit einer festen Kapsel aus Kunststoff oder Edelstahl zu überziehen, um so ein widerstandsfähiges Tilgungselement zu erhalten.

Anstelle eines Tilgungselements wie vorstehend beschrieben, bei dem eine metallische Masse 16 in einer elastischen Hülle 14 schwingt, sind auch andere Elemente 10 möglich. So könnte beispielsweise die Federkraft des Feder-Masse-Systems durch die Viskosität eines Fluids bereitgestellt werden. Dazu könnte eine dichte Hülle mit einem passend gewählten Fluid (bspw. einem Öl) gefüllt werden, in dem sich eine metallische Schwingmasse bewegen und damit schwingen kann. Wieder andere Ausführungsformen können auf eine oder mehrere an der Masse und der Hülle befestigte Feder(n), z.B. eine Spiralfeder, zurückgreifen.

Die Schwingungstilgungselemente der Erfindung könnten als einzige Maßnahme gegen Bauteilschwingungen eingesetzt werden, ebenso könnten sie aber auch beliebig mit den bisherigen Maßnahmen aus dem Stand der Technik kombiniert werden, also mit zumindest teilweise eingebrachten Versteifungssicken des Abschirmblechs oder mit Entkopplungselementen an den Befestigungspunkten des Blechs. Auf diese Weise könnten beispielsweise für verschiedene zu reduzierende Frequenzen unterschiedliche Maßnahmen eingesetzt werden, so dass z.B. eine bestimmte auftretende Schwingungsfrequenz durch Tilgungselemente verringert wird, während die übrigen auftretenden Frequenzen durch Entkopplung weiter abgeschwächt werden. In solchen Fällen könnten die Feder-Masse-Dimensionen des eingesetzten Schwingungstilgungselement auch im Voraus speziell auf eine entkoppelte oder mitschwingende Aufhängung abgestimmt werden.

Schwingungstilgungselemente gemäß der Erfindung können auf den unterschiedlichsten Abschirmblechen eingesetzt werden. Dies gilt sowohl für den Einsatzort der Bleche als auch für die Fertigungsmaterialien. So können metallische Bleche mit oder ohne Beschichtung oder beispielsweise Hitzeschilde aus Fasermaterialien eingesetzt werden und durch Anbringen eines Schwingungstilgungselements wie oben beschrieben vor Beschädigungen geschützt werden. Ebenso ist verständlich, dass die oben als Beispiele beschriebenen Tilgungselemente auch durch andere Elemente mit gleichem Prinzip ersetzt werden können und beliebig miteinander kombiniert werden können.

## Patentansprüche

1. Schwingungstilgungssystem, umfassend
ein Abschirmblech (2) für ein Motorbauteil,
mindestens ein Schwingungstilgungselement (10), das auf dem Abschirmblech (2) befestigt ist,
wobei jedes Schwingungstilgungselement (10) ein schwingfähiges Feder-Masse-System umfasst, dessen Federkraft und Masse so bemessen ist, dass es auf eine vorgegebene Schwingungsfrequenz des Abschirmblechs (2) abgestimmt ist; **dadurch gekennzeichnet, dass** das Schwingungstilgungselement eine metallische Schwingmasse (16) umfasst, und
die Schwingmasse (16) in einer elastischen Hülle (14), welche die Federkraft des Feder-Masse-Systems bereitstellt, schwingfähig gelagert ist,
oder
die Schwingmasse (16) zwischen zwei elastischen Elementen (24), welche die Federkraft des Feder-Masse-Systems bereitstellen, schwingfähig gelagert ist.

2. Schwingungstilgungssystem nach Anspruch 1, wobei mindestens ein Schwingungstilgungselement (10) in einem Bereich maximaler Schwingungsauslenkung des Abschirmblechs (2) befestigt ist.

3. Schwingungstilgungssystem nach Anspruch 1 oder 2, wobei mehrere Schwingungstilgungselemente (10) in einem vorgegebenen Abstand rund um einen Bereich maximaler Schwingungsauslenkung des Abschirmblechs (2) befestigt sind.

4. Schwingungstilgungssystem nach einem der vorhergehenden Ansprüche, wobei mindestens zwei Schwingungstilgungselemente (10) auf dem Abschirmblech (2) angebracht sind, die auf unterschiedliche Schwingungsfrequenzen abgestimmt sind.

5. Schwingungstilgungssystem nach einem der vorhergehenden Ansprüche, wobei mindestens ein Schwingungstilgungselement (10) so abgestimmt ist, dass es eine anfängliche Schwingungsfrequenz des Abschirmblechs in einen vorgegebenen Frequenzbereich verschiebt.

6. Schwingungstilgungssystem nach einem der vorhergehenden Ansprüche, wobei mindestens ein Schwingungstilgungselement (10) so abgestimmt ist, dass es eine vorgegebene Schwingungsfrequenz des Abschirmblechs dämpft.

7. Schwingungstilgungssystem nach einem der vorhergehenden Ansprüche, wobei das Feder-Masse-System zumindest teilweise mit einer festen Hülle (18) umgeben ist.

8. Schwingungstilgungssystem nach einem der vorhergehenden Ansprüche, wobei die Schwingmasse (16) im Betrieb parallel zur Auslenkungsrichtung des Bereichs des Abschirmblechs (2) schwingfähig ist, in dem das Schwingungstilgungselement (10) angebracht ist.

## Claims

1. A vibration elimination system, comprising
a shielding plate (2) for a motor component,
at least one vibration elimination element (10), which is fastened to the shielding plate (2),
wherein each vibration elimination element (10) comprises a spring-mass system that is capable of vibration, the spring force and mass of which is dimensioned such that said spring-mass system is matched to a predetermined vibration frequency of the shielding plate (2); **characterized in that**
the vibration elimination element comprises a metallic oscillation mass (16),and
the oscillation mass (16) is mounted in a manner capable of vibration in an elastic casing (14) which provides the spring force of the spring-mass system, or
the oscillation mass (16) is mounted in a manner capable of vibration between two elastic elements (24), which provide the spring force of the spring-mass system.

2. The vibration elimination system according to Claim 1, wherein at least one vibration elimination element (10) is fastened in a region of maximum vibration deflection of the shielding plate (2).

3. The vibration elimination system according to Claim 1 or 2, wherein a plurality of vibration elimination elements (10) are fastened at a predetermined distance around a region of maximum vibration deflection of the shielding plate (2).

4. The vibration elimination system according to one of the preceding claims, wherein at least two vibration elimination elements (10) are mounted on the shielding plate (2), which are matched to different vibration frequencies.

5. The vibration elimination system according to one of the preceding claims, wherein at least one vibration elimination element (10) is matched such that it shifts an initial vibration frequency of the shielding plate into a predetermined frequency range.

6. The vibration elimination system according to one of the preceding claims, wherein at least one vibration elimination element (10) is matched such that it damps a predetermined vibration frequency of the shielding plate.

7. The vibration elimination system according to one of the preceding claims, wherein the spring-mass system is surrounded at least partially by a fixed casing (18) .

8. The vibration elimination system according to one of the preceding claims, wherein during operation the oscillation mass (16) is capable of vibration parallel to the deflection direction of the region of the shielding plate (2), in which the vibration elimination element (10) is mounted.

## Revendications

1. Système d'amortissement des vibrations, comprenant une plaque de protection (2) pour un composant de moteur, au moins un élément d'amortissement des vibrations (10), qui est fixé sur la plaque de protection (2), dans lequel chaque élément d'amortissement des vibrations (10) comprend un système ressort-masse enclin à vibrer, dont la force de ressort et la masse sont proportionnés de telle sorte qu'ils soient harmonisés à une fréquence de vibration prescrite de la plaque de protection (2) ; **caractérisé en ce que** l'élément d'amortissement des vibrations comprend une masse oscillante métallique (16) et la masse oscillante (16) est positionnée de manière encline à vibrer dans une enveloppe élastique (14), qui fournit la force de ressort du système ressort-masse, ou la masse oscillante (16) est positionnée de manière encline à vibrer entre deux éléments élastiques (24), qui fournissent la force de ressort du système ressort-masse.

2. Système d'amortissement des vibrations selon la revendication 1, dans lequel au moins un élément d'amortissement des vibrations (10) est fixé dans une zone de déviation des vibrations maximale de la plaque de protection (2).

3. Système amortissement des vibrations selon la revendication 1 ou 2, dans lequel plusieurs éléments d'amortissement des vibrations (10) sont fixés à un écartement prescrit autour d'une zone de déviation de vibration maximale de la plaque de protection (2).

4. Système d'amortissement des vibrations selon une des revendications précédentes, dans lequel au moins deux éléments d'amortissement des vibrations (10) sont montés sur la plaque de protection (2), lesquels sont harmonisés à des fréquences de vibrations différentes.

5. Système d'amortissement des vibrations selon une des revendications précédentes, dans lequel au moins un élément d'amortissement des vibrations (10) est harmonisé de telle sorte qu'il décale une fréquence de vibration de départ de la plaque de protection dans une plage de fréquence prescrite.

6. Système d'amortissement des vibrations selon une des revendications précédentes, dans lequel au moins un élément d'amortissement des vibrations (10) est harmonisé de telle sorte qu'il atténue une fréquence de vibration prescrite de la plaque de protection.

7. Système d'amortissement des vibrations selon une des revendications précédentes, dans lequel le système ressort-masse est entouré au moins partiellement par une enveloppe solide (18).

8. Système d'amortissement des vibrations selon une des revendications précédentes, dans lequel la masse oscillante (16) est encline à vibrer en fonctionnement parallèlement à la direction de déviation de la zone de la plaque de protection (2), dans laquelle l'élément d'amortissement des vibrations (10) est monté.
